# EUROPEAN PATENT APPLICATION

(11) **EP 2 352 195 A1**
(43) Date of publication of application: **03.08.2011**
(21) Application number: 09822001.5
(22) Date of filing: 19.10.2009
(51) Int. Cl.: H01M 4/96, B01J 23/42, B01J 32/00, H01M 4/86, H01M 4/92, H01M 8/10

(54) **ELECTRODE CATALYST FOR FUEL CELL**

(30) Priority: 22.10.2008 JP 2008272018
(71) Applicant: Cataler Corporation, Shizuoka 437-1492 (JP)
(72) Inventor: TAKAHASHI Hiroaki, Toyota-shi Aichi 471-8571 (JP); HORIUCHI Yosuke, Toyota-shi Aichi 471-8571 (JP); TERADA Tomoaki, Kakegawa-shi Shizuoka 437-1492 (JP); NAGATA Takahiro, Kakegawa-shi Shizuoka 437-1492 (JP); TABATA Toshiharu, Kakegawa-shi Shizuoka 437-1492 (JP); KATAOKA Mikihiro, Kakegawa-shi Shizuoka 437-1492 (JP)
(74) Representative: Duckworth, Timothy John
(86) International application number: PCT/JP2009/067999
(87) International publication number: WO 2010/047304

(57) **Abstract**

An electrode catalyst for a fuel cell, which is capable of maintaining power generation capacity for long periods and has good durability, is provided. The electrode catalyst for a fuel cell is produced by causing a high crystalline carbon carrier with a carbon crystallization degree ranging from 57% to 90% to support a catalytic metal.

## Description

### TECHNICAL FIELD

The present invention relates to an electrode catalyst for a fuel cell, which has both high power generation capacity and high durability.

### BACKGROUND ART

In the past, polymer electrolyte fuel cells made use of catalysts comprising noble metal(s), such as platinum or platinum alloys, supported on carbon carriers as electrode catalysts, including cathode and anode catalysts. In general, a platinum-supported carbon carrier is prepared by adding sodium bisulfite to an aqueous solution of platinic chloride, allowing the mixture to react with a hydrogen peroxide solution, causing the carbon carrier to support the resulting platinum colloids, washing the resultants, and heating the resultants as needed. Electrodes of polymer electrolyte fuel cells are prepared by dispersing a platinum-supported carbon carrier in a polymer electrolyte solution to prepare an ink, coating a gas diffusion substrate such as a carbon paper with the ink, and drying the substrate. The polymer electrolyte membrane is sandwiched between such two electrodes, and then hot pressing is conducted. Thus, an electrolyte membrane-electrode assembly (MEA) can be constructed.

Platinum, which is catalytic metal, is an expensive noble metal, and thus the exertion of satisfactory performance is expected when only a small amount of platinum is supported. Accordingly, enhancement of catalytic activity with smaller amounts of platinum is under examination.

An electrode catalyst for a polymer electrolyte fuel cell is problematic in that the catalyst deteriorates during operation of the fuel cell, resulting in lowered power generation capacity. This is because potential increases at the time of startup, during shutdown, and during operation of the fuel cell, so as to accelerate oxidation reactions of the carbon carrier of the electrode catalyst and to cause carbon corrosion. Thus, the catalyst deteriorates and then the power generation capacity of the fuel cell decreases, as shown in the following formula (1).

C+2H₂O→CO₂+2H₂ (1)

Also, as shown in the following formula (2), platinum is dissolved, the catalyst deteriorates, and then the power generation capacity of the fuel cell decreases.

Pt→Pt²⁺+2e⁻ (2)

Such phenomenon occurs not only at the time of startup of a fuel cell, but also similarly during the shutdown period. Furthermore, when a fuel cell repeatedly undergoes startup and shutdown, the phenomenon tends to be further accelerated. Hence, power generation capacity can decrease as cell voltage decreases.

Therefore, it has been desired that a cathode catalyst layer functioning as a factor for determining power generation capacity suppress the corrosion of a carbon carrier and the decrease in catalytic activity due to elution of the catalyst (platinum).

JP Patent Publication (Kokai) No. 2005-26174 discloses the invention of a cathode catalyst layer that has an increased carbon carrier graphitization degree, and specific surface area and bulk density determined within specific regions in order to enhance carbon carrier corrosion resistance. Specifically, the average lattice plane distance d₀₀₂ of the [002] plane of a carrier ranges from 0.338 nm to 0.355 nm, the specific surface area of the same ranges from 80 m²/g to 250 m²/g, the bulk density of the same ranges from 0.30 to 0.45 g/ml, the 0.01- to 2.0- µm pore volume in the electrode catalyst layer is 3.8 µl/cm²/mg-Pt or more, and the 0.01-µm to 0.15-µm pore volume is 2.0 µl/cm²/mg-Pt or more.

However, when a carbon carrier with a high graphitization degree is used, whereas the corrosion resistance is improved, the specific surface area of the carbon carrier tends to decrease. This result indicates that catalyst particles supported by the carbon carrier may be aggregated, catalytic activity may decrease, and power generation capacity may decrease.

Hence, JP Patent Publication (Kokai) No. 2006-179463 A discloses the invention of a cathode-side catalyst layer comprising a carbon carrier that comprises carbon in which the average lattice plane distance d₀₀₂ in the [002] plane ranges from 0.343 nm to 0.358 nm as calculated from X-ray diffraction, the crystallite size, Lc, ranges from 3 nm to 10 nm, and the specific surface area ranges from 200 m²/g to 300 m²/g, catalyst particles containing platinum supported by the carbon carrier, and an electrolyte.

However, even an electrode catalyst in which the specific carbon carrier is as disclosed in the patent document above (JP Patent Publication (Kokai) No. 2006-179463 A) is problematic in that corrosion and deterioration take place after a long period of use. As a result, it is understood that adjustment alone of the average lattice plane distance d₀₀₂ in the [002] plane or the crystallite size, Lc, is insufficient.

### Summary of the Invention

### Problem to be Solved by the Invention

An object of the present invention is to provide an electrode catalyst for a fuel cell having good durability and exerting good cell performance by which power generation capacity can be maintained over long periods.

### Means for Solving the Problem

The present inventors have focused their attention on the crystallization degree of a carbon carrier and thus discovered that there is a strong correlation between carbon crystallization degree and durability (power generation capacity-maintaining rate) and between carbon crystallization degree and power generation capacity. Thus, they have achieved the present invention.

Specifically, the present invention relates to an electrode catalyst for a fuel cell, which is characterized in that a catalytic metal is supported on a high crystalline carbon carrier having a carbon crystallization degree ranging from 57% to 90%. The carbon crystallization degree is as defined by the following formula and calculated by XRD measurement.

Carbon crystallization degree = (peak area in the [002] plane) ÷ (peak area showing non crystallinity + peak area in the [002] plane)

The electrode catalyst for a fuel cell of the present invention was able to improve the durability (power generation capacity-maintaining rate) of an electrode catalyst since the carbon crystallization degree was higher than a predetermined value.

In the electrode catalyst for a fuel cell of the present invention, the crystallite size, Lc, of high crystalline carbon is preferably 2.3 nm or more. Here, the term "crystallite size, Lc" refers to the laminate thickness (in the direction of the C-axis) of a hexagonal mesh face based on the graphite structure of carbon composing a carbon carrier, which is calculated from the X-ray diffraction pattern of the carbon carrier.

In the electrode catalyst for a fuel cell of the present invention, the sizes of catalyst particles supported on a high crystalline carbon carrier range from preferably 2.2 nm to 5.4 nm and the catalyst supporting density ranges from preferably 10% to 80%.

### Effect of the Invention

According to the present invention, a catalytic metal such as platinum or a platinum alloy is supported on a high crystalline carbon carrier having a carbon crystallization degree ranging from 57% to 90%, thus forming an electrode catalyst for a fuel cell. Hence, the power generation capacity can be maintained over long periods. Specifically, according to the electrode catalyst for a fuel cell of the present invention, the corrosion resistance of a carbon carrier can be enhanced in a cathode catalyst layer at the time of startup and during shutdown. Furthermore, the decrease of catalytic activity can be prevented and thus stable power generation capacity can be obtained over long periods.

This description includes part or all of the contents as disclosed in the description and/or drawings of Japanese Patent Application No. 2008-272018, which is a priority document of the present application.

### Brief Description of the Drawings

Figure 1 shows the relationship between the crystallite size, Lc, and the performance-maintaining rate for various catalysts including the catalysts obtained in Example 1 and Comparative examples 1 to 5.
Figure 2 shows the relationship between the crystallization degree and the performance-maintaining rate or between the crystallization degree and the cell performance for the catalysts obtained in Examples 1 to 6 and Comparative examples 1 to 9.
Figure 3A is a schematic diagram (image) showing such a catalyst obtained in Examples 1 to 6, the performance of which does not decrease after a durability test because of suppressed deterioration of carbon. Figure 3B is a schematic diagram (image) showing such a catalyst obtained in Comparative examples 3-5 and 9, the performance of which decreases after a durability test.

### Best Mode for Carrying Out the Invention

The crystallization degree of a carbon carrier is easily adjustable by graphitization of the carbon carrier. A carbon carrier can be graphitized by any method without particular limitation, such as heat treatment that is generally conventionally employed. The heat treatment is preferably carried out under an inert gas atmosphere such as nitrogen, argon, or helium. Also, the temperature used for heat treatment and the length of heat treatment differ depending on the carbon carrier material to be used. Heat treatment may be carried out at 2,000°C to 3,000°C for about 5 to 20 hours. As described above, the carbon carrier crystallization degree is improved by graphitization or the like.

Examples and Comparative examples of the present invention are as described below.

### [Comparative example 1]

Commercial carbon, KetjenEC (KETJEN BLACK INTERNATIONAL) was heated at 2200°C for 5 hours, so that carbon black for which the Lc of carbon was 2.3 nm was obtained. Lc was calculated by XRD from the half-width of the [002] plane (2θ = 24°). The crystallization degree of carbon was 100% as found by XRD. Calculation of the crystallization degree by XRD was carried out by dividing the peak area of the [002] plane by the sum of the peak area in which no crystallinity was exhibited (the peak referred to as "halo" at 2θ = 20° or less) and the peak area of the [002] plane.

The above carbon black (5.0 g) was added to and dispersed in 1.2 L of pure water. A hexahydroxo platinum nitrate solution containing 5.0 g of platinum was added dropwise to the dispersion and then the solution was sufficiently stirred with carbon. About 100 mL of 0.1 N ammonia was added to the solution to adjust the pH to about 10, thereby forming the hydroxides that would be precipitated on the carbon, followed by reduction at 90°C using ethanol. The dispersion was filtered and then the thus obtained powder was vacuum dried at 100°C for 10 hours.

The platinum loading density of the thus obtained catalyst powder was 50 wt% of Pt as found via analysis of the waste solution. Also, the particle size of the catalyst was 2.6 nm as calculated (using the Scherrer equation) by XRD from the peak position in the Pt(111) plane.

### [Comparative example 2]

A catalyst was prepared by a method similar to that used in Comparative example 1. The carbon carrier used herein was commercial acetylene black (Denki Kagaku Kogyo Kabushiki Kaisha).

The Lc and crystallization degree of carbon were calculated in a manner similar to that used in Comparative example 1. The Lc was found to be 3.5 nm and the crystallization degree was found to be 100%. The particle size of the catalyst was 5.4 nm as calculated (using the Scherrer equation) by XRD from the peak position in the Pt (111) plane.

### [Example 1]

A catalyst was prepared by a method similar to that used in Comparative example 1. As a carbon carrier, a commercial product, KetjenEC (KETJEN BLACK INTERNATIONAL), was heated at 1900°C for 5.0 hours and then used. The Lc and the crystallization degree of carbon were calculated in a manner similar to that used in Comparative example 1. The Lc was found to be 3.2 nm and the crystallization degree was found to be 57%. The particle size of the catalyst was 2.2 nm, as calculated (using the Scherrer equation) by XRD from the peak position in the Pt (111) plane.

### [Example 2]

A catalyst was prepared by a method similar to that in Comparative example 1. As a carbon carrier, a commercial product, KetjenEC (KETJEN BLACK INTERNATIONAL), was heated at 2000°C for 3.0 hours and then used. The Lc and the crystallization degree of carbon were calculated in a manner similar to that in Comparative example 1. The Lc was found to be 3.6 nm and the crystallization degree was found to be 59%. The particle size of the catalyst was 1. 8 nm as calculated (using the Scherrer equation) by XRD from the peak position in the Pt (111) plane.

### [Example 3]

A catalyst was prepared by a method similar to that in Comparative example 1. As a carbon carrier, a commercial product, KetjenEC (KETJEN BLACK INTERNATIONAL), heated at 1900°C for 8.0 hours was used. The Lc and the crystallization degree of carbon were calculated in a manner similar to that in Comparative example 1. The Lc was found to be 2.8 nm and the crystallization degree was found to be 61 %. The particle size of the catalyst was 1.9 nm as calculated (using the Scherrer equation) by XRD from the peak position in the Pt (111) plane.

### [Example 4]

A catalyst was prepared by a method similar to that in Comparative example 1. As a carbon carrier, a commercial product, KetjenEC (KETJEN BLACK INTERNATIONAL), was heated at 1900°C for 10.0 hours and then used. The Lc and the crystallization degree of carbon were calculated in a manner similar to that in Comparative example 1. The Lc was found to be 2.7 nm and the crystallization degree was found to be 63%. The particle size of the catalyst was 1.9 nm as calculated (using the Scherrer equation) by XRD from the peak position in the Pt (111) plane.

### [Example 5]

A catalyst was prepared by a method similar to that in Comparative example 1. As a carbon carrier, a commercial product, KetjenEC (KETJEN BLACK INTERNATIONAL), was heated at 1900°C for 15.0 hours and then used. The Lc and the crystallization degree of carbon were calculated in a manner similar to that in Comparative example 1. The Lc was found to be 2.7 nm and the crystallization degree was found to be 80%. The particle size of the catalyst was 2.2 nm as calculated (using the Scherrer equation) by XRD from the peak position in the Pt (111) plane.

### [Example 6]

A catalyst was prepared by a method similar to that in Comparative example 1. As a carbon carrier, a commercial product, KetjenEC (KETJEN BLACK INTERNATIONAL), was heated at 1900°C for 20.0 hours and then used. The Lc and the crystallization degree of carbon were calculated in a manner similar to that in Comparative example 1. The Lc was found to be 2.5 nm and the crystallization degree was found to be 90%. The particle size of the catalyst was 2.4 nm as calculated (using the Scherrer equation) by XRD from the peak position in the Pt (111) plane.

### [Comparative example 3]

A catalyst was prepared by a method similar to that in Comparative example 1. As a carbon carrier, a commercial product, KetjenEC (KETJEN BLACK INTERNATIONAL), was heated at 1900°C for 0.5 hours and then used. The Lc and the crystallization degree of carbon were calculated in a manner similar to that in Comparative example 1. The Lc was found to be 3.2 nm and the crystallization degree was found to be 45%.

The length of heat treatment in Comparative example 3 was shorter than that in Example 1, so that the crystallization degree was found to be low in Comparative example 3. The particle size of the catalyst was 2.0 nm as calculated (using the Scherrer equation) by XRD from the peak position in the Pt (111) plane.

### [Comparative example 4]

A catalyst was prepared by a method similar to that in Comparative example 1. As a carbon carrier, a commercial product, KetjenEC (KETJEN BLACK INTERNATIONAL), was heated at 1700°C for 0.5 hours and then used. The Lc and the crystallization degree of carbon were calculated in a manner similar to that in Comparative example 1. The Lc was found to be 2.7 nm and the crystallization degree was found to be 32%. The particle size of the catalyst was 2.3 nm as calculated (using the Scherrer equation) by XRD from the peak position in the Pt (111) plane.

### [Comparative example 5]

A catalyst was prepared by a method similar to that in Comparative example 1. As a carbon carrier, a commercial product, Monaque (Cabot Corporation), was heated at 1700°C for 0.5 hours and then used. The Lc and the crystallization degree of carbon were calculated in a manner similar to that in Comparative example 1. The Lc was found to be 2.3 nm and the crystallization degree was found to be 6%. The particle size of the catalyst was 2.0 nm as calculated (using the Scherrer equation) by XRD from the peak position in the Pt (111) plane.

### [Comparative example 6]

A catalyst was prepared by a method similar to that in Comparative example 1. As a carbon carrier, a commercial product, KetjenEC (KETJEN BLACK INTERNATIONAL) was heated at 2200°C for 5.0 hours, activated with steam for 3 hours, and then used. The Lc and the crystallization degree of carbon were calculated in a manner similar to that in Comparative example 1. The Lc was found to be 2.4 nm and the crystallization degree was found to be 92%. The particle size of the catalyst was 2.5 nm as calculated (using the Scherrer equation) by XRD from the peak position in the Pt (111) plane.

### [Comparative example 7]

A catalyst was prepared by a method similar to that in Comparative example 1. As a carbon carrier, a commercial product, KetjenEC (KETJEN BLACK INTERNATIONAL) was heated at 2200°C for 5.0 hours, activated with steam for 1 hour, and then used. The Lc and the crystallization degree of carbon were calculated in a manner similar to that in Comparative example 1. The Lc was found to be 2.4 nm and the crystallization degree was found to be 94%. The particle size of the catalyst was 2.6 nm as calculated (using the Scherrer equation) by XRD from the peak position in the Pt (111) plane.

### [Comparative example 8]

A catalyst was prepared by a method similar to that in Comparative example 1. As a carbon carrier, a commercial product, KetjenEC (KETJEN BLACK INTERNATIONAL) was heated at 2200°C for 5.0 hours, activated with steam for 0.5 hours, and then used. The Lc and the crystallization degree of carbon were calculated in a manner similar to that in Comparative example 1. The Lc was found to be 3.0 nm and the crystallization degree was found to be 96%. The particle size of the catalyst was 2.8 nm as calculated (using the Scherrer equation) by XRD from the peak position in the Pt (111) plane.

### [Comparative example 9]

A catalyst was prepared by a method similar to that in Comparative example 1. As a carbon carrier, a commercial product, KetjenEC (KETJEN BLACK INTERNATIONAL) was heated at 2500°C for 5.0 hours, activated with steam for 10 hours, and then used. The Lc and the crystallization degree of carbon were calculated in a manner similar to that in Comparative example 1. The Lc was found to be 3.4 nm and the crystallization degree was found to be 51%. The particle size of the catalyst was 1.8 nm as calculated (using the Scherrer equation) by XRD from the peak position in the Pt (111) plane.

### [Initial performance measurement]

In order to compare catalytic performance at the initial stage, the initial voltage was measured as follows using the catalysts obtained in Examples 1-6 and Comparative examples 1-9. Characteristics of the current-voltage were measured using electronic load by setting the unit cell temperature at 80°C and supplying humidified air, which had been passed through a heating bubbler, to the cathode electrode with RH 100% and a stoichiometric ratio of 7.5 and humidified hydrogen, which had been passed through a heating bubbler, to the anode electrode with RH 100% and a stoichiometric ratio of 7.5. The amount of Pt at each electrode was 0.3 mg-Pt/cm².

### [Durability test]

A durability test (accelerated oxidation degradation test for carbon) was conducted using the catalysts obtained in Examples 1-6 and Comparative examples 1-9 under the following conditions. The unit cell temperature was set at 80°C, humidified air that had been passed through a heating bubbler was supplied to the cathode electrode with RH 100% and a stoichiometric ratio of 7.5, and humidified hydrogen that had been passed through a heating bubbler was supplied to the anode electrode with RH 100% and a stoichiometric ratio of 7.5. 1.8 V was applied for 10 hours and the high-voltage-potential state was maintained. Thereafter, characteristics of the current-voltage were used to designate performance after the durability test. Performance-maintaining rate was obtained based on the performance after the durability test and the initial performance.

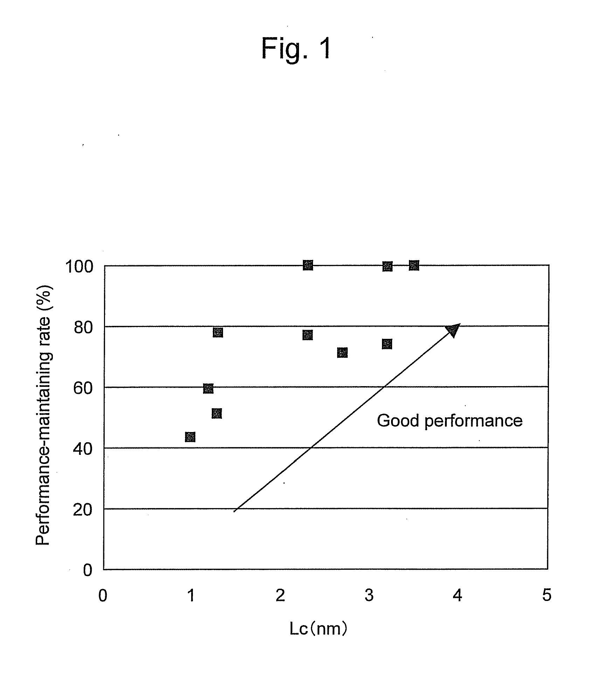

At first, Fig. 1 shows the relationship between crystallite size, Lc, and performance-maintaining rate for various types of catalyst, including the catalysts obtained in Example 1 and Comparative examples 1-5. As shown in Fig. 1, it is known that there is a correlation to a certain degree between the Lc and the durability-maintaining rate of a carbon carrier. As a result of examining various carbon carriers herein, it was confirmed that when a carbon carrier found to have an Lc of 2.3 nm (Comparative example 1) or more was used, the performance did not decrease. However, some carbon carriers each with an Lc of 2.3 nm or more exerted decreased performance.

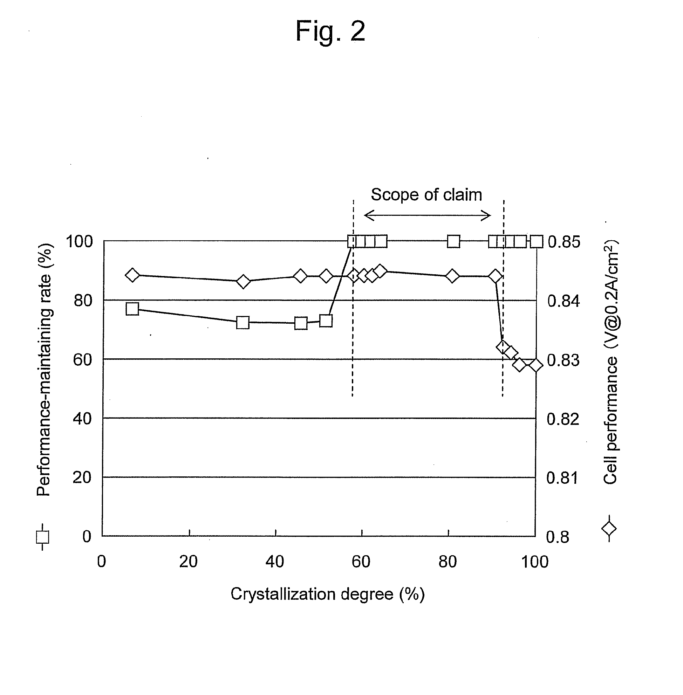

Accordingly, in addition to the Lc (2.3 nm or more) of carbon carriers, the crystallization degree of carbon was also noted. The following Table 1 and Fig. 2 show the crystallization degree, Lc, performance-maintaining rate, and Pt particle size of each catalyst. Also, Fig. 2 shows the relationship between the crystallization degree and the performance-maintaining rate for each catalyst and between the crystallization degree and the cell properties of each catalyst.

**[Table 1]**

| | Crystallization degree (%) | Lc (nm) | Performance-maintaining rate (%) | Pt particle size (nm) |
|---|---|---|---|---|
| Comparative example 1 | 100 | 2.3 | 100 | 2.7 |
| Comparative example 2 | 100 | 3.5 | 100 | 2.9 |
| Example 1 | 57 | 3.2 | 100 | 1.8 |
| Example 2 | 59 | 3.6 | 100 | 1.8 |
| Example 3 | 61 | 2.8 | 100 | 1.9 |
| Example 4 | 63 | 2.7 | 100 | 1.9 |
| Example 5 | 80 | 2.7 | 100 | 2.2 |
| Example 6 | 90 | 2.5 | 100 | 2.4 |
| Comparative example 3 | 6 | 2.3 | 76.5 | 1.8 |
| Comparative example 4 | 32 | 2.7 | 72 | 1.8 |
| Comparative example 5 | 45 | 3.2 | 72 | 1.7 |
| Comparative example 6 | 92 | 2.4 | 100 | 2.5 |
| Comparative example 7 | 94 | 2.4 | 100 | 2.6 |
| Comparative example 8 | 96 | 3.0 | 100 | 2.8 |
| Comparative example 9 | 51 | 3.4 | 73 | 1.8 |

As shown in the results of Fig. 2, the performance-maintaining rate was significantly improved when the crystallization degree was higher than 57%. However, when the crystallization degree was within the range of 90% or more, functional groups or defects in Pt/C catalysts decreased extremely, and there were few sites for adsorption to an electrolyte. Thus, it was considered that the amount of protons required for cell performance was insufficient, thus leading to reduced performance.

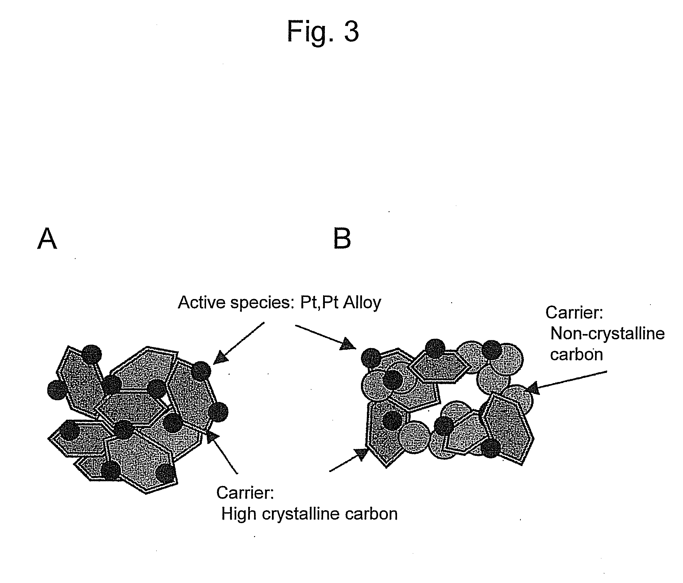

Figure 3A is a schematic diagram (image) showing such a catalyst obtained in Examples 1 to 6, the performance of which does not decrease because of suppressed deterioration of carbon. Figure 3B is a schematic diagram (image) showing such a catalyst obtained in Comparative examples 3-5, the performance of which was found to decrease after a durability test. It was confirmed in Example 1 that: the performance did not decrease even when the crystallization degree was 57%; and the lower limit (57% or more) of the crystallization degree was clearly defined.

In contrast, in the case of Comparative examples 3, 4, 5, and 9 (corresponding to the image in Fig. 3B), only a portion of such a carbon carrier had high crystallinity. Lc representing the information concerning such a high crystallinity portion was high, but the crystallization degree was low since non-crystalline carbon was also contained. The non-crystalline carbon portion of such a catalyst deteriorates more easily than a high crystallinity portion, resulting in decreased performance. Hence, the results are as shown in Fig. 2. Therefore, the catalysts of Comparative examples 3, 4, 5, and 9 cannot suppress any decrease in performance. Also, in the case of the catalysts of Comparative examples 6, 7, and 8, the crystallization degree was 90% or more. It was considered that the amount of protons required for cell performance was insufficient and the performance decreased.

### [Industrial applicability]

The present invention exhibits good durability due to the use of a high crystalline carbon carrier having a carbon crystallization degree ranging from 57% to 90%, allowing power generation capacity to be maintained for long periods. Thus, the present invention contributes to the practical, widespread use of fuel cells.

All publications, patents, and patent applications cited herein are incorporated herein by reference in their entirety.

## Claims

1. An electrode catalyst for a fuel cell, wherein a catalytic metal is supported on a high crystalline carbon carrier with a carbon crystallization degree ranging from 57% to 90%.

2. The electrode catalyst for a fuel cell according to claim 1, wherein the crystallite size, Lc, of the high crystalline carbon is 2.3 nm or more.

3. The electrode catalyst for a fuel cell according to claim 1 or 2, wherein the sizes of catalyst particles supported on the high crystalline carbon carrier range from 2.2 nm to 5.4 nm and the catalyst loading density ranges from 10% to 80%.
